# EUROPEAN PATENT SPECIFICATION

(11) **EP 2 414 446 B1**
(45) Date of publication and mention of the grant of the patent: **13.02.2013**
(21) Application number: 10723420.5
(22) Date of filing: 29.03.2010
(51) Int. Cl.: C08K 5/00, C08K 5/5313

(54) **FLAME RESISTANT SEMIAROMATIC POLYAMIDE RESIN COMPOSITION AND ARTICLES THEREFROM**
FLAMMHEMMENDE SEMIAROMATISCHE POLYAMIDHARZZUSAMMENSETZUNG UND ARTIKEL DARAUS
COMPOSITION DE RÉSINE DE POLYAMIDE SEMI-AROMATIQUE ININFLAMMABLE ET ARTICLES FAITS EN CETTE COMPOSITION

(30) Priority: 30.03.2009 US 164572 P
(43) Date of publication of application: 08.02.2012
(73) Proprietor: E. I. du Pont de Nemours and Company, Wilmington, DE 19898 (US)
(72) Inventor: SAGA, Yuji, Utsunomiya-shi Tochigi 321-3231 (JP); ZHANG, Wei W., Zhangjiang Hi-Tech Park (CN)
(74) Representative: Heinemann, Monica
(86) International application number: PCT/US2010/029015
(87) International publication number: WO 2010/117708

(56) References cited:
- EP-A2- 1 500 676
- WO-A1-2005/033192
- DATABASE WPI Week 199843 Thomson Scientific, London, GB; AN 1998-501824 XP002591753 & JP 10 219105 A (UNITIKA LTD) 18 August 1998 (1998-08-18)

## Description

### Field of the Invention

The present invention relates to a non-halogenated flame retardant polyamide resin composition which has a high stiffness and hardness, exhibits a low warpage, is excellent in external appearance, including properties such as gloss and has reduced corrosion effects on melt processing equipment.

### Background of the Invention

The electric appliance represented by office automation (OA) equipments and appliances such as a note-book-type personal computer or a word processor has a trend towards light-weight, thin-wall and environment-friendly. The housing materials should have high flowability, high stiffness, low warpage and preferably non-halogenated flame retardance.

The housing materials of the above OA machine include carbon fiber-reinforced ABS/PBT and ABS/PC alloy.

The housing materials of the above OA machine also include semi-crystalline polyamide (PA6, PA66), However, because the polyamide is semi-crystalline this typically results in poor appearance and high warpage.

In JP10219105, the composition comprises 20-69 weight percent (abbreviated wt %) polyamide resin mixture, 10-30 wt % bromine-based flame retardant, 1-10 wt % auxiliary flame retardant, and 20-69 wt% platy silicate or glass flakes, the sum of all the ingredients being 100 wt %. The polyamide resin mixture comprises 50-95 wt % crystalline polyamide resin and 50-5 wt % amorphous polyamide resin derived from isophthalic acid, terephthalic acid, hexamethylene diamine, and 3,3'-dimethyl-4,4'-diaminodicyclohexylmethane (EMS Grivory EX 3038). The resin composition which has a high stiffness, exhibits a low warpage and is excellent in external appearance, such as smoothness. The resin composition is commonly used for electric appliances represented by an OA appliance such as a note-book-type personal computer or a word processor. However, the composition is a bromine-type flame retardant.

JP9241505 disclosed a polyamide resin composition which has good mechanical properties and heat resistance and can provide a molded article that is excellent in appearance by compounding a crystalline polyamide containing a specific mica mineral with an amorphous polyamide. This composition comprises 98-70 parts by weight (abbreviated pts wt) crystalline polyamide containing 0.01-30 wt% swellable fluoromica mineral and 2-30 pts wt amorphous polyamide. However, it has a low flexural modulus.

It is also desirable that polyamide resin compositions be flame retardant and meet the UL-94 standard for a high degree of flame retardance. This need has promoted research into a variety of methods for imparting flame retardance to polyamide resins. A common method of imparting flame retardance to thermoplastic resin compositions involves incorporating a halogenated organic compound such as brominated polystyrene as a flame retardant along with an antimony compound that acts as a synergist for the flame retardant. However, the use of halogenated flame retardants has certain drawbacks in that these materials tend to decompose or degrade at the temperatures used to mold polyamide compositions. The degradation products can corrode the barrels of compounding extruders, the surfaces of molding machines, and other melt processing equipment that the halogenated flame retardants come in contact with at elevated temperatures. This problem can be particularly pronounced in the case of semiaromatic polyamide compositions, as these materials often have melting points that are significantly higher than those of many aliphatic polyamides. The degradation products of halogenated flame retardants can also result in molded articles that have poor surface appearance.

WO2009009360 disclosed non-halogenated flame retardant thermoplastic semiaromatic polyamide compositions having reduced corrosion effects on melt processing equipment. The composition comprises a thermoplastic polyamide component (a) comprising at least one semiaromatic polyamide; at least one phosphinate or diphosphinate based flame retardant (b); zinc borate (c); and optionally, at least one inorganic reinforcing agent and/or filler.

It is also desirable that polyamide resin compositions have low warpage and high stiffness for electric appliances. WO2008062755 discloses a flame-retardant polyamide composition that is excellent in fluidity during molding and granulation ability during granulation on a biaxial granulator or the like. A molded article produced from the composition is excellent in mechanical properties including stiffness and heat resistance and flame retardancy during a reflow soldering process and has a low warpage property. Specifically disclosed is a flame-retardant polyamide composition comprising 20 to 80 % by mass of a specific polyamide resin (A), 1 to 40% by mass of a flame retardant agent (B), 5 to 60 % by mass of a glass fiber (C), and 0.5 to 5 % by mass of an auxiliary flame retardant agent (D), which can be molded into an article having a reduced warpage. Preferably, the glass fiber (C) has a cross-section having an aspect ratio larger than 3. WO2008068898 disclosed a flame-retardant polyamide resin composition which exhibits excellent flame retardancy, mechanical characteristics and electrical characteristics, and is suitable for electrical/electronic components or electrical components for automobiles. Also disclosed is a molded article made of such a flame-retardant polyamide resin composition. Specifically disclosed is a flame-retardant polyamide resin composition containing a polyamide resin (A), a phosphorus flame retardant (B) and a glass fiber (C) having a non-circular cross section. Specifically, the composition contains 15-78% by weight of the polyamide resin (A), 2-20% by weight of the phosphorus flame retardant (B) and 20-65% by weight of the glass fiber (C) having a non-circular cross section.

Therefore, it would thus be desirable to obtain a polyamide composition having high flowability, high stiffness, and low warpage. Furthermore, it would be desirable to obtain a non-halogenated flame retardant polyamide composition that leads to reduced levels of corrosion of melt processing equipment while satisfying certain regulatory requirements.

### Summary of the Invention

There is disclosed and claimed herein a flame retardant polyamide resin composition, comprising:
(a) about 30 to about 80 weight percent of a polyamide component comprising a blend of about 40 to 85 weight percent of one or more semi-crystalline polyamides and about 15 to 60 weight percent of one or more amorphous polyamides having repeating units derived from a carboxylic acid component and an aliphatic diamine component, the carboxylic component being isophthalic acid or a mixture of isophthalic acid and one or more other carboxylic acids wherein the carboxylic acid component comprises at least 55 mole percent, based on the carboxylic acid component, of isophthalic acid, and the aliphatic diamine component being selected from the group consisting of hexamethylene diamine, a mixture of hexamethylene diamine and 2-methyl pentamethylene diamine, and a mixture of hexamethylene diamine and 2- ethyltetramethylene diamine; in which the aliphatic diamine component contains at least 40 mole percent, based on the aliphatic diamine component, of hexamethylene diamine;
(b) at least one flame retardant comprising one or more of a phosphinate of the formula (I); a diphosphinate of the formula (II); and polymers of (I) and/or (II) 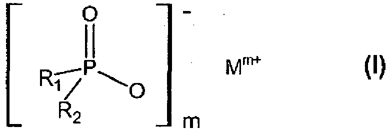 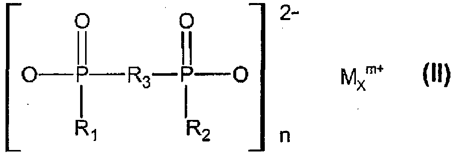 wherein R₁ and R₂ are identical or different and are C₁ -C₆ alkyl, linear or branched, and/or aryl; R₃ is C₁-C₁₀-alkylene, linear or branched, C₆-C₁₀-arylene, -alkylarylene or -arylalkylene; M is calcium ions, magnesium ions, aluminum ions and/or zinc ions; m is 2 to 3; n is 1 or 3; and x is 1 or 2;
(c) zinc borate; and
(d) about 10 to about 60 weight percent of glass fiber having a non-circular cross section,
wherein the weight percentages of (a) and (d) are based on the total weight of the composition; wherein flame retardant (b) is present in an amount that is about 10 to about 45 percent of the weight of polyamide (a); and wherein zinc borate (c) is present in an amount that is about 0.5 to about 5 percent of the weight of flame retardant (b).

### Detailed Description of the Invention

The term "polymer" as used herein, generally includes but is not limited to, homopolymers, copolymers (such as for example, block, graft, random and alternating copolymers), terpolymers, etc. and blends and modifications thereof. Furthermore, unless otherwise specifically limited, the term "polymer" shall include all possible geometrical configurations of the material.

The present invention addresses the retention of an acceptable balance of properties (e.g., mechanical performance, high flowability, and low warpage, etc.) of polyamide compositions, while at the same time attaining excellent flame retardancy with the low corrosion effect on melt processing equipment, by containing non-halogenated flame retardant into a blend of semi-crystalline polyamide and amorphous, aliphatic polyamide in conjunction with inorganic reinforcing agents and/or fillers having a non-circular cross section thereof.

The semi-crystalline polyamide includes aliphatic or semi-aromatic semi-crystalline polyamides.

The semi-crystalline aliphatic polyamide may be derived from aliphatic and/or alicyclic monomers such as one or more of adipic acid, sebacic acid, azelaic acid, dodecanedoic acid, or their derivatives and the like, aliphatic C₆-C₂₀ alkylenediamines, alicyclic diamines, lactams, and amino acids. Preferred diamines include bis(*p*-aminocyclohexyl)methane; hexamethylenediamine; 2-methylpentamethylenediamine; 2-methyloctamethylenediamine; trimethylhexamethylenediamine; 1,8-diaminooctane; 1,9-diaminononane; 1,10-diaminodecane; 1,12-diaminododecane; and *m*-xylylenediamine. Preferred lactams or amino acids include 11-aminododecanoic acid, caprolactam, and laurolactam.

Preferred semicrystalline aliphatic polyamides are selected from the group consisting of polyamide 6; polyamide 6,6; polyamide 4,6; polyamide 6,10; polyamide 6,12; polyamide 11; polyamide 12; polyamide 9,10; polyamide 9,12; polyamide 9,13; polyamide 9,14; polyamide 9,15; polyamide 6,16; polyamide 9,36; polyamide 10,10; polyamide 10,12; polyamide 10,13; polyamide 10,14; polyamide 12,10; polyamide 12,12; polyamide 12,13; polyamide 12,14; polyamide 6,14; polyamide 6,13; polyamide 6,15; polyamide 6,16; and polyamide 6,13.

The semi-aromatic semi- crystalline polyamides are one or more homopolymers, copolymers, terpolymers, or higher polymers that are derived from monomers containing aromatic groups. Examples of monomers containing aromatic groups are terephthalic acid and its derivatives. It is preferred that about 5 to about 75 mole percent of the monomers used to make the aromatic polyamide used in the present invention contain aromatic groups, and it is still more preferred that about 10 to about 55 mole percent of the monomers contain aromatic groups.

Preferred semi-crystalline semi-aromatic polyamides are selected from the group consisting of poly(*m*-xylylene adipamide) (polyamide MXD,6), poly(dodecamethylene terephthalamide) (polyamide 12,T), poly(decamethylene terephthalamide) (polyamide 10,T), poly(nonamethylene terephthalamide) (polyamide 9,T), hexamethylene adipamide/hexamethylene terephthalamide copolyamide (polyamide 6,T/6,6), hexamethylene terephthalamide/2-methylpentamethylene terephthalamide copolyamide (polyamide 6,T/D,T); hexamethylene adipamide/hexamethylene terephthalamide/hexamethylene isophthalamide copolyamide (polyamide 6,6/6,T/6,I); poly(caprolactam-hexamethylene terephthalamide) (polyamide 6/6,T); and the like.

In the present invention, a semi-crystalline semi-aromatic polyamide is preferred in terms of dimension stability and flame retardancy

Semi-crystalline semi-aromatic polyamides derived from monomers containing aromatic groups are especially advantageous for uses in applications that require a balance of properties (e.g., mechanical performance, high flowability, and low warpage, etc.) in the polyamide composition as well as excellent flame retardancy with the low corrosion effect on melt processing equipment.

The semicrystalline polyamide is present in about 40 to about 85 (and preferably about 40 to about 60) weight percent, based on the total amount of semicrystalline and amorphous polyamide present.

The amorphous polyamides are well-known in the art. They are one or more homopolymers, copolymers, terpolymers, or higher polymers that are derived from monomers containing isophthalic acid and/or dimethyldiaminodicyclohexylmethane groups.

In the preferred amorphous polyamide, the polyamide consists of a polymer or copolymer having repeating units derived from a carboxylic acid component and an aliphatic diamine component. The carboxylic acid component is isophthalic acid or a mixture of isophthalic acid and one or more other carboxylic acids wherein the carboxylic acid component contains at least 55 mole percent, based on the carboxylic acid component, of isophthalic acid. Other carboxylic acids that may be used in the carboxylic acid component include terephthalic acid and adipic acid. The aliphatic diamine component is hexamethylene diamine or a mixture of hexamethylene diamine and 2-methyl pentamethylene diamine and/or 2-ethyltetramethylene diamine, in which the aliphatic diamine component contains at least 40 mole percent, based on the aliphatic diamine component, of hexamethylene diamine.

Preferred amorphous polyamides are selected from the group consisting of poly(hexamethylene terephthalamide/hexamethylene isophthalamide) (polyamide 6,T/6,I), poly(hexamethylene isophthalamide) (polyamide 6,l), poly(metaxylylene isophthalamide/ hexamethylene isophthalamide) (polyamide MXD,I/6,I), poly(metaxylylene isophthalamide/ metaxylylene terephthalamide/ hexamethylene isophthalamide) (polyamide MXD,I/MXD,T/6,I/6,T), poly(metaxylylene isophthalamide/dodecamethylene isophthalamide) (polyamide MXD,I/12,I), poly(metaxylylene isophthalamide) (polyamide MXD,I), poly(dimethyldiaminodicyclohexylmethane isophthalamide/dodecanamide) (polyamide MACM,I/12), poly(dimethyldiaminodicyclohexylmethane isophthalamide/dimethyldiaminodicyclohexylmethane terephthalamide/dodecanamide) (polyamide MACM,I/MACM,T/12), poly(hexamethylene isophthalamide/dimethyldiaminodicyclohexylmethane isophthalamide/dodecanamide) (polyamide 6,I/MACM,I/12), poly(hexamethylene isophthalamide/hexamethylene terephthalamide/ dimethyldiaminodicyclohexylmethane isophthalamid/dimethyldiaminodicyclohexylmethane terephthalamide) (polyamide 6,I/6,T/MACM,I/MACM,T), poly(hexamethylene isophthalamide/hexamethylene terephthalamide/ dimethyldiaminodicyclohexylmethane isophthalamid/dimethyldiaminodicyclohexylmethane terephthalamideldodecanamide) (polyamide 6,I/6,T/MACM,I/MACM,T/12), poly(dimethyldiaminodicyclohexylmethane isophthalamide/ dimethyldiaminodicyclohexyimethane dodecanamide) (polyamide MACM,I/MACM,12) and mixtures thereof.

Of these, poly (hexamethylene terephthalamide/hexamethylene isophthalamide) (polyamide 6,T/6,I), and mixtures of two or more of the preferred amorphous polymers listed above are preferred. Especially preferred are poly (hexamethylene terephthalamide/hexamethylene isophthalamide) (polyamide 6,T/6,I).

The amorphous polyamide is present in about 15 to about 60 weight percent, or more preferably in about 40 to about 60 weight percent, based on the total amount of semicrystalline and amorphous polyamide present.

The flame retardant (b) optionally, comprises condensation products of melamine and/or reaction products of melamine with phosphoric acid and/or reaction products of condensation products of melamine with phosphoric acid and/or comprising a mixture of these.

R₁ and R₂ may be identical or different and are preferably methyl, ethyl, *n-*propyl, isopropyl, *n*-butyl, *tert*-butyl, *n*-pentyl and/or phenyl. R₃ is preferably methylene, ethylene, *n*-propylene, isopropylene, *n*-butylene, *tert*-butylene, *n-*pentylene, *n*-octylene, *n*-dodecylene, or phenylene or naphthylene, or methylphenylene, ethylphenylene, *tert*-butylphenylene, methylnaphthylene, ethylnaphthylene or *tert*-butylnaphthylene, or phenylmethylene, phenylethylene, phenylpropylene or phenylbutylene. M is preferably aluminum ions or zinc ions.

The flame retardant (b) compounds useful in the instant invention and as detailed in the Summary of Invention above and elsewhere herein are disclosed in U.S. Patent 6,255,371, which is hereby incorporated by reference herein.

Preferred phosphinates are aluminum methylethylphosphinate, and, more preferably, aluminum diethylphosphinate.

The flame retardant (b) is present in the composition in an amount that is about 10 to about 45 weight percent of the amount of polyamide component (a). (E.g., if the composition comprises 40 weight percent of polyamide component (a), it comprises about 4 to about 18 weight percent flame retardant.)

By the term "zinc borate" is meant one or more compounds having the formula:

(ZnO)_{X}(B₂O₃)_{Y}(H₂O)_{Z}

wherein X is preferably between 2 and 4, inclusive; Y is preferably between 1 and 3, inclusive; and Z is preferably between 0 and 5, inclusive. Zinc borate is sold and supplied by US Borax under the tradename Firebrake®. Preferred forms of zinc borate are of the formula selected from the group consisting of (ZnO)₂(B₂O₃)₃(H₂O)_{3.5} (Firebrake® 290), (ZnO)₄(B₂O₃)₁(H₂O)₁ (Firebrake® 415), (ZnO)₂(B₂O₃)₃(Fi₂O)₀ (Firebrake® 500), and mixtures thereof.

The zinc borate is present in an amount that is about 1 to about 5, or preferably about 1 to about 4, or more preferably about 1.2 to about 3.7, or yet more preferably about 1.4 about 3.6 percent of the weight of the flame retardant (b). For the purposes of determining the amount of zinc borate present, if the zinc borate is a hydrate (i.e., Z is not zero), the weight of the corresponding anhydrous form of the zinc borate is used, thus only the amounts of ZnO and B₂O₃ present in the zinc borate compound are considered to contribute to the zinc borate weight that is used in the calculation. As used herein in conjunction with the amount of zinc borate used in a composition, the term "zinc borate" refers to anhydrous form of the compound in question.

The composition comprises glass fibers having a non-circular cross section. The glass fiber having a non-circular cross section refers to a glass fiber having a major axis lying perpendicular to a longitudinal direction of the fiber and corresponding to the longest linear distance in the cross section. The non-circular cross section has a minor axis corresponding to the longest linear distance in the cross section in a direction perpendicular to the major axis. The non-circular cross section of the fiber may have a variety of shapes including a cocoon-type (figure-eight) shape; a rectangular shape; an elliptical shape; a semielliptical shape; a roughly triangular shape; a polygonal shape; and an oblong shape. As will be understood by those skilled in the art, the cross section may have other shapes. The ratio of the length of the major axis to that of the minor axis is preferably between about 1.5:1 and about 6:1. The ratio is more preferably between about 2:1 and 5:1 and yet more preferably between about 3:1 to about 4:1. Suitable glass fiber having a non-circular cross section are disclosed in EP 0 190 001 and EP 0 196 194. The glass fiber may be in the form of long glass fibers, chopped strands, milled short glass fibers, or other suitable forms known to those skilled in the art.

The glass fiber having non-circular cross section used in the present invention is present in about 20 to about 60 weight percent, or preferably in about 35 to about 60 weight percent, or more preferably in about 40 to about 55 weight percent, based on the total weight of the composition.

The thermoplastic composition can include other fillers than the glass fiber having non-circular cross section. Examples of the fillers include one or more of glass fibers having non-circular cross section glass flakes, kaolin, clay, talc, wollastonite, calcium carbonate, silica, carbon fibers, potassium titanate, etc. When used, the fillers are preferably present in about 5 to about 40 weight percent, or more preferably in about 5 to about 25 weight percent, or more preferably in about 5 to 20 weight percent, based on the total weight of the composition.

The composition may optionally further comprise one or more additional flame retardant synergists. Examples include silicone, metal oxides such as silica, boehmite, aluminum oxide, iron oxide, titanium oxide, manganese oxide, magnesium oxide, zirconium oxide, zinc oxide, molybdenum oxide, cobalt oxide, bismuth oxide, chromium oxide, tin oxide, antimony oxide, nickel oxide, copper oxide and tungsten oxide, metal powder such as aluminum, iron, titanium, manganese, zinc, molybdenum, cobalt, bismuth, chromium, tin, antimony, nickel, copper and tungsten, and metal salts such as barium metaborate, zinc carbonate, magnesium carbonate, calcium carbonate, and barium carbonate. Preferred synergists are boehmite (aluminum hydroxide oxide [AIO(OH)]) and/or aluminum oxide. When used, the one or more synergists are present in about 10 to about 20 weight percent, based on the total weight of synergist and flame retardant.

The composition may optionally comprise additional additives such as other polymers, impact modifiers, ultraviolet light stabilizers, heat stabilizers, antioxidants, processing aids, lubricants, and/or colorants (including dyes, pigments, carbon black, and the like).

The compositions are made by melt-blending the components using any known methods. The component materials may be mixed to uniformity using a melt-mixer such as a single or twin-screw extruder, blender, kneader, Banbury mixer, etc. to give a resin composition. Or, part of the materials may be mixed in a melt-mixer, and the rest of the materials may then be added and further melt-mixed until uniform.

The compositions of the invention may be formed into articles using any known melt-processing means such as injection molding, blow molding, extrusion, or thermoforming. Articles molded using injection molding are most preferred.

Examples of articles that may be formed from the compositions of the present invention are electric appliance represented by an OA appliance such as a note-book-type personal computer or a word processor.

The invention will become better understood upon having reference to the following examples of the invention together with the descriptions of preparation and -testing techniques and materials used.

### EXAMPLES

### Compounding

The polymeric compositions shown in Table 1 were prepared by compounding in a 40 mm ZSK twin screw extruder. All ingredients were blended together and added to the rear of the extruder except that fibers were side-fed into a downstream barrel. Barrel temperatures were set at about 320-330°C. After exiting the extruder, the blended compositions were cooled and cut into pellets. The pellets were surface coated with 0.2 weight percent of calcium montanate.

### Testing methods

Spiral flow was measured by injection molding of the thermoplastic composition using an injection molding machine (SE30D, manufactured by Sumitomo Co., Ltd.) with an injection pressure of 80 MPa, an injection rate of 150 mm/sec, and a thickness of 0.3 mm at a melt temperature of 325 °C and mold temperature of 130 °C.

Tensile strength and elongation were measured using the ISO 527-1/2 standard method. Flexural strength and modulus were measured using the IS0178-1/2 standard method. Notched charpy impact was measured using the ISO 179/1eA standard method. The samples were dry-as-molded (DAM) with at a melt temperature of 325 °C and mold temperature of 90°C or 130°C The sample are ISO 4 mm bars molded on an injection molding machine at a melt temperature of 325 °C and mold temperature of 90 -150 °C

Warpage was measured on a disk (150 mm diameter and 1.0 mm thickness) that were dry-as-molded (DAM). The coordinates of 8 points marked equally around the circumference of a disk placed on a flat stone table were measured with a Mitsutoyo FJ704 Coordinate Measuring Machine. A virtual flat disk plane was calculated from those eight coordinates, and the magnitude of warpage of the disk can be expressed by the distance between the highest real point and the lowest real point and the virtual flat plane.

The UL-94 flammability test was measured by using 0.8 mm thick bars. The bars were conditioned at 23oC for 48 hrs at 50% relative humidity and at 70oC for 168 hrs in air oven.

Hardness was measured on a disk (150 mm diameter and 1.0 mm thickness) using the JIS K5600-5-4 standard method. The disk was dry-as-molded (DAM) at a melt temperature of 325 °C and mold temperature of 130 °C

Gloss was measured on a disk (150 mm diameter and 1.0 mm thickness) by a gloss meter VG-2000 (Nippon Denshoku IND. Co., Ltd) with an angle of incidence at 60 °C. The disk was dry-as-molded (DAM) at a melt temperature of 325 °C and mold temperature of 130°C.

The corrosive effect each composition had on molding equipment was tested by running each sample through a Toshiba EC40 molding machine equipped with a 25 mm screw for 24 hours continuously. Each sample was dried in advance to a moisture level below 0.1 weight percent. The hold up time in the molding machine was 8 minutes, the melt temperature was 325-330 °C and the mold temperature was 90 °C. The screw head was equipped with a check ring made of CPM9V steel. The outer diameter of the ring was measured prior to the molding run. After each molding run, the screw was disassembled, any polymeric residues were removed from the surface of the check ring, and the outer diameter of the ring was again measured. The difference in diameters is reported in Table 1. The surface appearance of the check ring was also checked visually and any observed corrosion is indicated in Table 1.

### Materials

Polyamide 6,T/6,6 refers to HTN 502HF NC010, available from E.I. du Pont de Nemours.
Polyamide 6,T/6I refers to HTN 503 NC010, available from E.I. du Pont de Nemours
Polyamide 66 refers to FE3218, available from E.I. du Pont de Nemours
2,6-NDA refers to 2,6-napthalene dicarboxylic acid, available from BP Amoco Chemical Company.
   Boehmite refers to Celasule BMT-33, available from Kawai Sekkai Kogyo.
Zinc borate refers to Firebrake ZB, a zinc borate of the formula (ZnO)₂(B₂O₃)₃(H₂O)_{3.5} available from US Borax. The corresponding amount of anhydrous zinc borate is given in Table 1-3. The amount of anhydrous zinc borate used as a percentage of the flame retardant is also given in Table 1-3.
Flame retardant refers to Exolit® OP 1230, an aluminum diethylphosphinate available from Clariant.
Circular glass fiber refers to Asahi FT 756D, available from Asahi Fiber Glass Co., Ltd
Glass fiber A refers to Nittobo CSG 3PA-820S available from Nittobo Co., Ltd. having a elliptical non-circular cross section. The ratio of the length of the major axis to that of the minor access is 4.
Glass fiber B refers to Nittobo CSH 3PA-870S available from Nittobo Co., Ltd. having a cocoon-type non-circular cross section. The ratio of the length of the major axis to that of the minor access is 2.
Colorant refers to PAM(F) 25420 Black, available from Daini Seika Co., Ltd. Lubricant refers to Licomont CaV102, calcium montanate available from Clariant.

### Examples 1-7 and Comparative Examples C-1 - C-5

In Table 1, Comparative Example C-1, and Example 1 and 2 indicate that polyamide 6,T/6,6 and 6,T/6,I blend reinforced with glass fiber having a non-circular section had lower warpage than polyamide 6,T/6,6 and 6,T/6,I blend reinforced with circular glass fiber.

In Table 2, Comparative Example C-2, C-3, and Examples 1 and 3 indicate that semicrystalline and amorphous polyamide blend has lower warpage than semicrystalline polyamide alone.

In Table 3, Examples 4-10 demonstrated that there is no or very small diameter change of check ring after 24 hours of molding when zinc borate is 0.06% or above. In the cases of Comparative Example C-4 containing no zinc borate, the diameter change of check ring is relatively large compared with Examples 4-10 and the entire surface of the check ring showed corrosion.

**Table 1**

| Example | | C-1 | 1 | 2 |
|---|---|---|---|---|
| Polyamide 6,T/6,6 | | 27.25 | 27.25 | 27 |
| Polyamide 6,T/6,I | | 11.7 | 11.7 | 11.6 |
| Flame retardant | | 9 | 9 | 9 |
| Zinc borate | | 0.2 | 0.2 | 0.2 |
| | Anhydrous zinc borate | 0.17 | 0.17 | 0.17 |
| | Anhydrous zinc borate as a percentage of weight of flame retardant | 1.9 | 1.9 | 1.9 |
| Circular glass fiber | | 50 | | |
| Glass fiber A | | | 50 | |
| Glass fiber B | | | | 50 |
| 2,6-NDA | | 0.35 | 0.35 | 0.35 |
| Boehmite | | 1.5 | 1.5 | 1.5 |
| Colorant | | 1 | 1 | 1 |
| Lubricant | | 0.2 | 0.2 | 0.2 |
| Properties | | | | |
| Flow length (mm) | | 65 | 101 | 92 |
| Tensile strength (MPa) | | 181 | 195 | 170 |
| Tensile elongation (%) | | 1.9 | 1.6 | 1.5 |
| Flexural modulus (GPa) | | 14.8 | 15.8 | 15.6 |
| Flexural strength (MPa) | | 270 | 280 | 255 |
| Notched charpy impact (kJ/m2) | | 8 | 12.8 | 10.7 |
| Warpage (mm) mold temp. 90 °C | | | 0.10 | 0.35 |
| Warpage (mm) mold temp. 130 °C | | 3.56 | 1.39 | 1.23 |
| Flammability UL94 | | V-0 | | V-0 |
| Hardness | | 3H | 4H | 3H |
| Gloss | | 68 | 74 | 72 |

Ingredient quantities are given in weight percentages based on the total weight of the composition.

**Table 2**

| Example | | C-2 | 3 | C- 3 | 1 |
|---|---|---|---|---|---|
| Polyamide 6,T/6,6 | | | | 38.95 | 27.25 |
| Polyamide 6,T/6,I | | | 11.8 | | 11.7 |
| Polyamide 66 | | 39.3 | 27.5 | | |
| Flame retardant | | 9 | 9 | 9 | 9 |
| Zinc borate | | 0.2 | 0.2 | 0.2 | 0.2 |
| | Anhydrous zinc borate | 0.17 | 0.17 | 0.17 | 0.17 |
| | Anhydrous zinc borate as a percentage of weight of flame retardant | 1.9 | 1.9 | 1.9 | 1.9 |
| Glass fiber A | | 50 | 50 | 50 | 50 |
| 2,6-NDA | | 0 | 0 | 0.35 | 0.35 |
| Boehmite | | 1.5 | 1.5 | 1.5 | 1.5 |
| Colorant | | 1 | 1 | 1 | 1 |
| Lubricant | | 0.2 | 0.2 | 0.2 | 0.2 |
| Properties | | | | | |
| Flow length (mm) | | | 48 | 102 | 101 |
| Tensile strength (MPa) | | 190 | | 170 | 195 |
| Tensile elongation (%) | | 1.8 | | 1.4 | 1.6 |
| Flexural modulus (GPa) | | 16.3 | | 14.9 | 15.8 |
| Flexural strength (MPa) | | 288 | | 256 | 280 |
| Notched charpy impact (kJ/m2) | | 13.2 | | 12.1 | 12.8 |
| Warpage (mm) mold temp 90 °C | | 1.65 | 1.59 | 0.64 | 0.10 |
| Warpage (mm) mold temp 130 °C | | | | 2.30 | 1.39 |
| Flammability UL94 | | | V-1 | | |
| Hardness | | | 3H | 3H | 4H |
| Gloss | | | 62 | 68 | 74 |

Ingredient quantities are given in weight percentages based on the total weight of the composition.

**Table 3**

| Example | | C-4 | 4 | 5 | 6 | 7 | 8 | 9 | 10 |
|---|---|---|---|---|---|---|---|---|---|
| Polyamide 6,T/6,6 | | 26.4 | 26.34 | 26.28 | 27.00 | 27.25 | 16.04 | 16.00 | 16.00 |
| Polyamide 6,T/6,I | | 11.4 | 11.4 | 11.4 | 11.6 | 11.7 | 21.7 | 21.72 | 21.68 |
| Flame retardant | | 9 | 9 | 9 | 9 | 9 | 9 | 9 | 9 |
| Zinc borate(0.6 to 3.3, 0.5 to 5 wt%) | | | 0.06 | 0.12 | 0.2 | 0.3 | 0.06 | 0.08 | 0.12 |
| | Anhydrous zinc borate | | 0.05 | 0.10 | 0.17 | 0.26 | 0.05 | 0.07 | 0.10 |
| | Anhydrous zinc borate as a percentage of weight of flame retardant | | 0.6 | 1.1 | 1.9 | 2.9 | 0.6 | 0.8 | 1.1 |
| Glass fiber A | | 50 | 50 | 50 | 50 | 50 | 50 | 50 | 50 |
| 2,6-NDA | | 0.7 | 0.7 | 0.7 | 0.7 | 0.7 | 0.7 | 0.7 | 0.7 |
| Boehmite | | 1.5 | 1.5 | 1.5 | 1.5 | 1.5 | 1.5 | 1.5 | 1.5 |
| Colorant | | 1 | 1 | 1 | 1 | 1 | 1 | 1 | 1 |
| Lubricant | | 0.2 | 0.2 | 0.2 | 0.2 | 0.2 | 0.2 | 0.2 | 0.2 |
| Properties | | | | | | | | | |
| Flow length (mm) | | | | 112 | 126 | | | | |
| Tensile strength (MPa) | | | | 188 | 188 | | | | |
| Tensile elongation (%) | | | | 1.5 | 1.6 | | | | |
| Flexural modulus (GPa) | | | | 16.8 | 15.7 | | | | |
| Flexural strength (MPa) | | | | 278 | 266 | | | | |
| Notched charpy impact (kJ/m2) | | | | 12.3 | 14.5 | | | | |
| Warpage (mm) mold temp. 90 °C | | | | 0.09 | 0.08 | | | | |
| | Warpage (mm) mold temp. 130 °C | | | | 1.16 | | | | |
| | Flammability UL94 | | | V-0 | V-0 | | | | |
| | Hardness | | | 3H | 3H | | | | |
| | Gloss | | | | 76 | | | | |
| | Diameter change of check ring after 24 hr testing (mm) | -0.094 | 0 | 0 | -0.001 | -0.002 | 0 | 0 | 0 |
| | Check ring surface appearance | corrode d | good | good | corrode d | corrode d | good | corrode d | corrode d |

Ingredient quantities are given in weight percentages based on the total weight of the composition.

## Claims

1. A flame retardant polyamide resin composition, comprising:
(a) 30 to 80 weight percent of a polyamide component comprising a blend of 40 to 85 weight percent of one or more semi-crystalline polyamides and 15 to 60 weight percent of one or more amorphous polyamides having repeating units derived from a carboxylic acid component and an aliphatic diamine component, the carboxylic component comprising at least 55 mole percent, based on the carboxylic acid component, of isophthalic acid, and the aliphatic diamine component being selected from the group consisting of hexamethylene diamine, a mixture of hexamethylene diamine and 2-methyl pentamethylene diamine, and a mixture of hexamethylene diamine and 2-ethyltetramethylene diamine; in which the aliphatic diamine component contains at least 40 mole percent of hexamethylene diamine, based on the aliphatic diamine component;
(b) at least one flame retardant comprising one or more of a phosphinate of the formula (I); a diphosphinate of the formula (II); and polymers of (I) and/or (II) 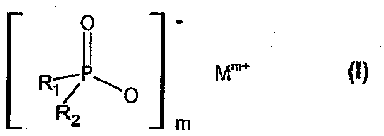 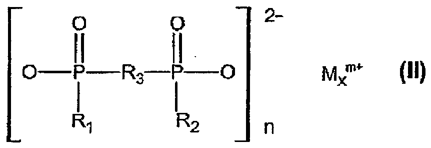 wherein R₁ and R₂ are identical or different and are C₁ -C₆ alkyl, linear or branched, and/or aryl; R₃ is G₁-C₁₀-alkylene, linear or branched, C₆-C₁₀-arylene, -alkylarylene or -arylalkylene; M is calcium ions, magnesium ions, aluminum ions and/or zinc ions; m is 2 to 3; n is 1 or 3; and x is 1 or 2;
(c) zinc borate; and
(d) 10 to 60 weight percent of glass fiber having non-circular cross section.
wherein the weight percentages of (a) and (d) are based on the total weight of the composition; wherein flame retardant (b) is present in an amount that is 10 to 45 percent of the weight of polyamide (a); and wherein zinc borate (c) is present in an amount that is 0.5 to 5 percent of the weight of flame retardant (b).

2. The composition of claim 1, wherein in the polyamide component the semi-crystalline polyamide, is present in amount of between 50 - 85 percent by weight based on weight of polyamides and the amorphous polyamide is present in an amount of between 15 - 50 percent by weight based on weight of polyamides.

3. The composition of claim 1, wherein the at least one flame retardant (b) is aluminumdiethylphosphinate and/or aluminum methylethylphosphinate.

4. The composition of claim 1 wherein the one or more semi-crystalline polyamides are selected from the group consisting of polyamide 6; polyamide 6,6; polyamide 4,6; polyamide 6,10; polyamide 6,12; polyamide 11; polyamide 12; polyamide 9,10; polyamide 9,12; polyamide 9,13; polyamide 9, 14; polyamide 9,15; polyamides 6,16; polyamide 9,36; polyamide 10,10; polyamide 10,12; polyamide 10,13; polyamide 10,14; polyamide 12,10; polyamide 12,12; polyamide 12,13; polyamide 12,14; polyamide 6,14; polyamide 6,13; polyamide 6,15; polyamide 6,16; polyamide 6,13; poly(*m*-xylylene adipamide) (polyamide MXD,6); poly(dodecamethylene terephthalamide) (polyamide 12,T); poly(decamethylene terephthalamide) (polyamide 10,T); poly(nonamethylene terephthalamide) (polyamide 9,T); hexamethylene adipamide/hexamethylene terephthalamide copolyamide (polyamide 6,T/6,6); hexamethylene terephthalamide/2-methylpentamethylene terephthalamide copolyamide (polyamide 6,T/D,T); hexamethylene adipamide/hexamethylene terephthalamide/hexamethylene isophthalamide copolyamide (polyamide 6,6/6,T/6,I); poly(caprolactam-hexamethylene terephthalamide) (polyamide 6/6,T);

5. The composition of claim 1 wherein the one or more amorphous polyamides are selected from the group consisting of poly(hexamethylene terephthalamide/hexamethylene isophthalamide), poly(hexamethylene Isophthalamide), poly(metaxylylene isophthalamide/ hexamethylene isophthalamide), poly(metaxylylene isophthalamide/ metaxylylene terephthalamide/ hexamethylene isophthalamide), poly(metaxylylene isophthalamide/dodecamethylene isophthalamide), poly(metaxylylene isophthalamide), poly(dimethyldiaminodicyclohexylmethane isophthalamide/dodecanamide), poly(dimethyldiaminodicyclohexylmethane isophthalamide/dimethyldiaminodicyclohexylmethane terephthalamide/dodecanamide), poly(hexamethylene isophthalamide/ dimethyldiaminodicyclohexylmethane isophthalamide/dodecanamide), poly(hexamethylene isophthalamide/hexamethylene terephthalamide/ dimethyldiaminodicyclohexylmethane isophthalamid/dimethyldiaminodicyclohexylmethane terephthalamide), poly(hexamethylene isophthalamide/hexamethylene terephthalamide/dimethyldiaminodicyclohexylmethane isophthalamide/dimethyldiaminodicyclohexylmethane terephthalamide/dodecanamide) and, poly(dimethyldiaminodicyclohexylmethane isophthalamide/dimethyldiaminodicyclohexylmethane dodecanamide).

6. The composition of claim 1, wherein the zinc borate (c) is of the formula selected from the group consisting of (ZnO)₂(B₂O₃)₃(H₂0)_{3.5}, (ZnO)₄(B₂O₃)₁(H₂0)₁, (ZnO)₂(B₂O₃)₃(H₂O)₀, and mixtures thereof.

7. The composition of claim 1, wherein the semi-crystalline polyamides are semi-aromatic polyamides selected from the group consisting of poly(dodecamethylene terephthalamide), poly(decamethylene terephthalamide) poly(nonamethylene terephthalamide), hexamethylene adipamide/hexamethylene terephthalamide copolyamide, hexamethylene terephthalamide/2-methylpentamethylene terephthalamide copolyamide, hexamethylene adipamide/hexamethylene terephthalamide/hexamethylene isophthalamide copolyamide and poly(caprolactam-hexamethylene terephthalamide).

8. The composition of claim 1, wherein the glass fiber having non-circular cross section is present in 35 to 60 weight percent.

9. An article comprising the composition of claim 1.

## Patentansprüche

1. Flammhemmende Polyamidharzzusammensetzung, umfassend:
(a) 30 bis 80 Gewichtsprozent einer Polyamidkomponente, umfassend ein Gemisch von 40 bis 85 Gewichtsprozent von einem oder mehreren semikristallinen Polyamiden und 15 bis 60 Gewichtsprozent von einem oder mehreren amorphen Polyamiden mit sich wiederholenden Einheiten, abgeleitet von einer Carbonsäurekomponente und einer aliphatischen Diaminkomponente, wobei die Carboxylkomponente mindestens 55 Molprozent, bezogen auf die Carbonsäurekomponente, von Isophthalsäure umfasst und die aliphatische Diaminkomponente aus der Gruppe, bestehend aus Hexamethylendiamin, einem Gemisch von Hexamethylendiamin und 2-Methylpentamethylendiamin und einem Gemisch von Hexamethylendiamin und 2-Ethyltetramethylendiamin, ausgewählt ist; in welchen die aliphatische Diaminkomponente mindestens 40 Molprozent von Hexamethylendiamin, bezogen auf die aliphatische Diaminkomponente, enthält;
(b) mindestens einen Flammhemmstoff, umfassend ein oder mehrere von einem Phosphinat der Formel (I); einem Diphosphinat der Formel (II); und Polymeren von (I) und/oder (II) 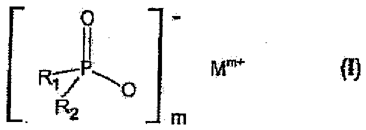 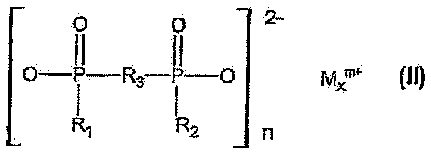 wobei R₁ und R₂ identisch oder verschieden sind und C₁-C₆-Alkyl, linear oder verzweigt, und/oder Aryl sind; R₃ C₁-C₁₀-Alkylen, linear oder verzweigt, C₆-C₁₀-Arylen, -Alkylarylen oder -Arylalkylen ist; M Calciumionen, Magnesiumionen, Aluminiumionen und/oder Zinkionen bedeutet; m 2 bis 3 ist; n 1 oder 3 ist; und x 1 oder 2 ist;
(c) Zinkborat; und
(d) 10 bis 60 Gewichtsprozent von Glasfaser mit nicht-kreisförmigem Querschnitt,
wobei die Gewichtsprozentgehalte von (a) und (d) auf das Gesamtgewicht der Zusammensetzung bezogen sind; wobei der Flammhemmstoff (b) in einem Anteil vorhanden ist, der 10 bis 45 Prozent von dem Gewicht von Polyamid (a) beträgt; und wobei Zinkborat (c) in einem Anteil vorhanden ist, der 0,5 bis 5 Prozent von dem Gewicht von Flammhemmstoff (b) beträgt.

2. Zusammensetzung nach Anspruch 1, wobei in der Polyamidkomponente das semikristalline Polyamid in einem Anteil von zwischen 50-85 Gewichtsprozent, bezogen auf das Gewicht von Polyamiden, vorhanden ist und das amorphe Polyamid in einem Anteil von zwischen 15-50 Gewichtsprozent, bezogen auf das Gewicht von Polyamiden, vorhanden ist.

3. Zusammensetzung nach Anspruch 1, wobei der mindestens eine Flammhemmstoff (b) Aluminiumdiethylphosphinat und/oder Aluminiummethylethylphosphinat ist.

4. Zusammensetzung nach Anspruch 1, wobei das eine oder die mehreren semi-kristallinen Polyamide aus der Gruppe, bestehend aus Polyamid 6; Polyamid 6,6; Polyamid 4,6; Polyamid 6,10; Polyamid 6,12; Polyamid 11; Polyamid 12; Polyamid 9,10; Polyamid 9,12; Polyamid 9,13; Polyamid 9,14; Polyamid 9,15; Polyamid 6,16; Polyamid 9,36; Polyamid 10,10; Polyamid 10,12; Polyamid 10,13; Polyamid 10,14; Polyamid 12,10; Polyamid 12,12; Polyamid 12,13; Polyamid 12,14; Polyamid 6,14; Polyamid 6,13; Polyamid 6,15; Polyamid 6,16; Polyamid 6,13; Poly(m-xylylenadipamid) (Polyamid MXD,6); Poly(dodecamethylenterephthalamid) (Polyamid 12,T); Poly(decamethylenterephthalamid) (Polyamid 10,T); Poly(nonamethylenterephthalamid) (Polyamid 9,T); Hexamethylenadipamid/Hexamethylenterephthalamid-Copolyamid (Polyamid 6,T/6,6); Hexamethylenterephthalamid/2-Methylpentamethylenterephthalamid-Copolyamid (Polyamid 6,T/D,T); Hexamethylenadipamid/Hexamethylenterephthalamid/Hexamethylenisophthalamid-Copolyamid (Polyamid 6,6/6,T/6,I); Poly(caprolactam-hexamethylenterephthalamid) (Polyamid 6/6,T), ausgewählt sind.

5. Zusammensetzung nach Anspruch 1, wobei das eine oder die mehreren amorphen Polyamide aus der Gruppe, bestehend aus Poly(hexamethylenterephthalamid/hexamethylenisophthalamid), Poly(hexamethylenisophthalamid), Poly(metaxylylenisophthalamid/hexamethylenisophthalamid), Poly(metaxylylenisophthalamid/metaxylylenterephthalamid/hexamethylenisophthalamid), Poly(metaxylylenisophthalamid/dodecamethylenisophthalamid), Poly(metaxylylenisophthalamid), Paly(dimethyldiaminodicyclohexylmethanisophthalamid/dodecanamid), Poly(dimethyldiaminodicyclohexylmethanisophthalamid/- Dimethyldiaminodicyclohexylmethan-terephthalamid/dadecanamid), Poly(hexamethylenisophthalamid/dimethyldiaminodicyclohexylmethanisophthalamid/- dodecanamid), Poly(hexamethylenisophthalamid/hexamethylenterephthalamid/dimethyldiaminodicycloh exylmethan-isophthalamid/dimethyldiaminodicyclohexylmethanterephthalamid), Poly(hexamethylenisophthalamid/hexamethylenterephthalamid/- dimethyldiaminodicyclohexylmethanisophthalamid/dimethyldiaminodicyclohexylmethanterephthalamid/dodecanamid) und Poly(dimethyldiaminodicyclohexylmethanisophthalamid/- dimethyldiaminodicyclohexylmethandodecan-amid), ausgewählt sind.

6. Zusammensetzung nach Anspruch 1, wobei das Zinkborat (c) die Formel, ausgewählt aus der Gruppe, bestehend aus (ZnO)₂(B₂O₃)₃(H₂O)_{3,5}, (ZnO)₄(B₂O₃)₁(H₂O)₁, (ZnO)₂(B₂O₃)₃(H₂O)₀ und Gemischen davon, hat.

7. Zusammensetzung nach Anspruch 1, wobei die semi-kristallinen Polyamide semiaromatische Polyamide, ausgewählt aus der Gruppe, bestehend aus Poly(dodecamethylenterephthalamid), Poly(decamethylenterephthalamid), Poly(nonamethylenterephthalamid), Hexamethylenadipamid/Hexamethylenterephthalamid-Copolyamid, Hexamethylenterephthalamid/2-Methylpentamethylenterephthalamid-Copolyamid, Hexamethylenadipamid/Hexamethylenterephthalamid/Hexamethylenisophthalamid-Copolyamid und Poly(caprolactam-hexamethylenterephthalamid), sind.

8. Zusammensetzung nach Anspruch 1, wobei die Glasfaser mit nicht-kreisförmigem Querschnitt in 35 bis 60 Gewichtsprozent vorhanden ist.

9. Gegenstand, umfassend die Zusammensetzung nach Anspruch 1.

## Revendications

1. Composition de résine de polyamide ignifuge, comprenant:
(a) de 30 à 80 pour-cent en poids d'un composant de polyamide comprenant un mélange de 40 à 85 pour-cent en poids d'un ou de plusieurs polyamides semi-cristallins et de 15 à 60 pour-cent en poids d'un ou de plusieurs polyamides amorphes possédant des unités de répétition dérivées d'un composant d'acide carboxylique et d'un composant de diamine aliphatique, le composant carboxylique comprenant au moins 55 pour-cent en moles, sur la base du composant d'acide carboxylique, d'acide isophtalique, et le composant de diamine aliphatique étant choisi dans le groupe constitué d'hexaméthylène diamine, d'un mélange d'hexaméthylène diamine et de 2-méthylpentaméthylène diamine et d'un mélange d'hexaméthylène diamine et de 2-éthyltétraméthylène diamine; où le composant de diamine aliphatique contient au moins 40 pour-cent en moles d'hexaméthylène diamine, sur la base du composant de diamine aliphatique;
(b) au moins un agent ignifuge comprenant un ou plusieurs parmi un phosphinate de la formule (I); un diphosphinate de la formule (II); et des polymères de (I) et/ou de (II): 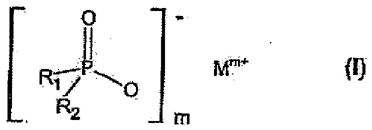 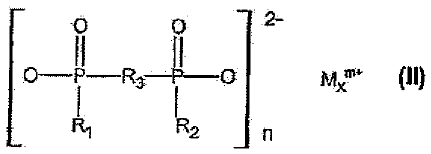 dans lesquelles formules R₁ et R₂ sont identiques ou différentes et sont un alkyle C₁-C₆, linéaire ou ramifié, et/ou un aryle; R₃ est un alkylène C₁-C₁₀, linéaire ou ramifié, un arylène, un alkylarylène ou un arylalkylène C₆-C₁₀; M est des ions calcium, des ions magnésium, des ions aluminium et/ou des ions zinc; m est de 2 à 3; n est 1 ou 3; et x est 1 ou 2;
(c) un borate de zinc; et
(d) de 10 à 60 pour-cent en poids de fibre de verre possédant une section transversale non circulaire,
dans laquelle les pourcentages en poids de (a) et (d) sont basés sur le poids total de la composition; dans laquelle l'agent ignifuge (b) est présent dans une quantité qui est de 10 à 45 pour-cent du poids de polyamide (a); et dans laquelle le borate de zinc (c) est présent dans une quantité qui est de 0,5 à 5 pour-cent du poids de l'agent ignifuge (b).

2. Composition selon la revendication 1, dans laquelle, dans le composant de polyamide, le polyamide semi-cristallin est présent dans une quantité entre 50 et 85 pour-cent en poids sur la base du poids de polyamides et le polyamide amorphe est présent dans une quantité entre 15 et 50 pour-cent en poids sur la base du poids de polyamides.

3. Composition selon la revendication 1, dans laquelle le au moins un agent ignifuge (b) est le diéthylphosphinate d'aluminium et/ou le méthyléthylphosphinate d'aluminium.

4. Composition selon la revendication 1, dans laquelle les un ou plusieurs polyamides semi-cristallins sont choisis dans le groupe constitué de polyamide 6; de polyamide 6,6; de polyamide 4,6; de polyamide 6,10; de polyamide 6,12; de polyamide 11; de polyamide 12; de polyamide 9,10: de polyamide 9,12; de polyamide 9,13; de polyamide 9,14; de polyamide 9,15; de polyamide 6,16; de polyamide 9,36; de polyamide 10,10; de polyamide 10,12; de polyamide 10,13; de polyamide 10,14; de polyamide 12,10; de polyamide 12,12; de polyamide 12,13; de polyamide 12,14; de polyamide 6,14; de polyamide 6,13; de polyamide 6,15; de polyamide 6,16; de polyamide 6,13; de poly(m-xylylène adipamide) (polyamide MXD,6); de poly(dodécaméthylène téréphtalamide) (polyamide 12,T); de poly(décaméthylène téréphtalamide) (polyamide 10,T); de poly(nonaméthylène téréphtalamide) (polyamide 9,T); de copolyamide d'hexaméthylène adipamide/hexaméthylène téréphtalamide (polyamide 6,T/6,6); de copolyamide d'hexaméthylène téréphtalamide/2-méthylpentaméthylène téréphtalamide (polyamide 6,T/D,T); de copolyamide d'hexaméthylène adipamide/hexaméthylène téréphtalamide/hexaméthylène isophtalamide (polyamide 6,6/6,T/6,I); de poly(caprolactame-hexaanéthylène téréphtalamide) (polyamide 6/6,T).

5. Composition selon la revendication 1, dans laquelle les un ou plusieurs polyamides amorphes sont choisis dans le groupe constitué de poly(hexaméthylène téréphtalamide/hexaméthylène isophtalamide), de poly(hexaméthylène isophtalamide), de poly(métaxylylène isophtalamide/hexaméthylène isophtalamide), de poly(métaxylylène isophtalamide/métaxylylène téréphtalamide/hexaméthylène isophtalamide), de poly(métaxylylène isophtalamide/dodécaméthylène isophtalamide), de poly(métaxylylène isophtalamide), de poly(diméthyldiaminodicyclohexylméthane isophtalamide/dodécanamide), de poly(diméthyldiamino-dicyclohexylméthane isophtalamide/diméthyldiaminodicyclohexylméthane téréphtalamide/dodécanamide), de poly(hexaméthylène isophtalamide/diméthyldiaminodicyclohexylméthane isophtalamide /dodécanamide), de poly(hexaméthylène isophtalamide/hexaméthylène téréphtalamide/diméthyldiamino-dicyclohexylméthane isophtalamide/diméthyldiaminodicyclohexylméthane téréphtalamide), de poly(hexaméthylène isophtalamide/hexaméthylène téréphtalamide/diméthyldiaminodicyclohexylméthane isophtalamide/diméthyldiaminodicyclohexylméthane téréphtalamide/dodécanamide) et de poly(diméthyl-diaminodicyclohexylméthane isophtalamide/diméthyldiaminodicyclohexylméthane dodécanamide).

6. Composition selon la revendication 1, dans laquelle le borate de zinc (c) est de la formule choisie dans le groupe constitué de (ZnO)₂(B₂O₃)₃(H₂O)_{3,5}, (ZnO)₄(B₂O₃)₁(H₂O)₁, (ZnO)₂(B₂O₃)₃(H₂O)₀ et de mélanges de ceux-ci.

7. Composition selon la revendication 1, dans laquelle les polyamides semi-cristallins sont des polyamides semi-aromatiques choisis dans le groupe constitué de poly(dodécaméthylène téréphtalamide), de poly(décaméthylène téréphtalamide), de poly(nonaméthylène téréphtalamide), de copolyamide d'hexaméthylène adipamide/hexaméthylène téréphtalamide, de copolyamide d'hexaméthylène téréphtalamide/2-méthylpentaméthylène téréphtalamide, de copolyamide d'hexaméthylène adipamide/hexaméthylène téréphtalamide/hexaméthylène isophtalamide et de poly(caprolactame-hexaméthylène téréphtalamide).

8. Composition selon la revendication 1, dans laquelle la fibre de verre possédant une section transversale non circulaire est présente dans 35 à 60 pour-cent en poids.

9. Article comprenant la composition selon la revendication 1.
